# EUROPEAN PATENT SPECIFICATION

(11) **EP 2 726 764 B1**
(45) Date of publication and mention of the grant of the patent: **03.02.2016**
(21) Application number: 12740747.6
(22) Date of filing: 18.06.2012
(51) Int. Cl.: F16J 13/12

(54) **LOCKING SHAFT SEAL SUPPORT AND METHODS**
VERRIEGELUNGSWELLEN-DICHTUNGSTRÄGER UND VERFAHREN DAFÜR
SUPPORT ET PROCÉDÉS POUR JOINT D'ARBRE À VERROUILLAGE

(30) Priority: 30.06.2011 US 201161503186 P
(43) Date of publication of application: 07.05.2014
(73) Proprietor: Carrier Corporation, Farmington, CT 06034 (US)
(72) Inventor: VON BORSTEL, Steven E., Preble, New York 13141 (US); VAIDYA, Amit, Jamesville, New York 13078 (US)
(74) Representative: Klunker . Schmitt-Nilson . Hirsch
(86) International application number: PCT/US2012/042872
(87) International publication number: WO 2013/003084

(56) References cited:
- EP-A2- 0 112 269
- US-A- 2 124 183
- US-A- 4 114 904

## Description

### BACKGROUND

The disclosure relates to shaft seals. More particularly, the disclosure relates to compressor shaft seals.

Sealing a rotating shaft to a stationary housing is a common situation. In one exemplary baseline group of sealing systems, a primary seal (seal rotor) is carried by the shaft to rotate therewith. The primary seal engages a mating face (seal stator) of the housing. The primary seal may be carried by a support/carrier which resiliently biases the primary seal into engagement with the mateface so as to maintain engagement despite vibrations, excursions, and the like. In the exemplary such systems, the seal carrier itself includes an additional static seal sealing the seal carrier to the shaft.

In some implementations, the seal carrier may be axially held in compression against a shoulder or other structure of the shaft. One example of such a system is seen in US Pregrant Publication 2004/0113369A1 of Wright et al. However, in other situations, it is desired to clamp the carrier to the shaft. Several manufacturers produce seal supports/carriers with radial set screws in a fixed portion of the carrier to engage the shaft and secure the carrier to the shaft. Installing such a seal carrier requires radial access to the set screws.

### SUMMARY

One aspect of the disclosure involves a shaft seal assembly having a support body and a seal. The support body extends from a first end to a second end and has a central passageway for accommodating the shaft. The support body has a compliant axially intermediate portion, an axially outboard portion outboard of the compliant intermediate portion, and an axially inboard portion inboard of the intermediate portion. The inboard portion has an externally threaded portion and a plurality of slots through the externally threaded portion. The seal is carried by the axially outboard portion.

US 4 114 904 A which constitutes the closest prior art according to the preamble of claim 1, discloses a system for clamping a bellows assembly of a mechanical seal to its flange which comprises the use of set screws, the threads of which are received in openings defined in part by a body flange and in part by a bellows support ring. The portion in the support ring is threaded while the remainder is not threaded. The threads in the threaded opening portion may match those of the set screw, i.e., helical, or may be merely parallel, i.e. not helical. In the latter, the arc of contact between the threads is relatively small.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is an axial sectional/cutaway view of a compressor.
FIG. 2 is an enlarged view of a stuffing box region of the compressor of FIG. 1.
FIG. 3 is a view of a seal support.
FIG. 4 is a second view of the seal support.
FIG. 5 is a central longitudinal sectional view of the seal support of FIG. 3.
FIG. 6 is a view of external threads of a proximal member of the seal support of FIG. 3.
FIG. 7 is an axial sectional view of threads of a locking ring of the seal support.
FIG. 8 is a first view of a seal installation/removal process.
FIG. 9 is a second view of a seal installation/removal process.

Like reference numbers and designations in the various drawings indicate like elements.

### DETAILED DESCRIPTION

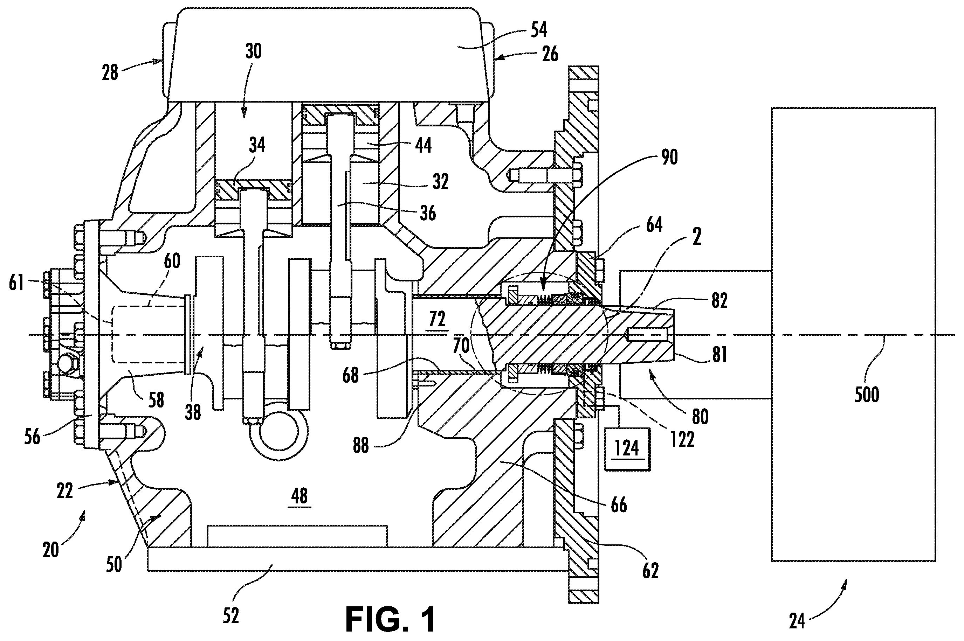

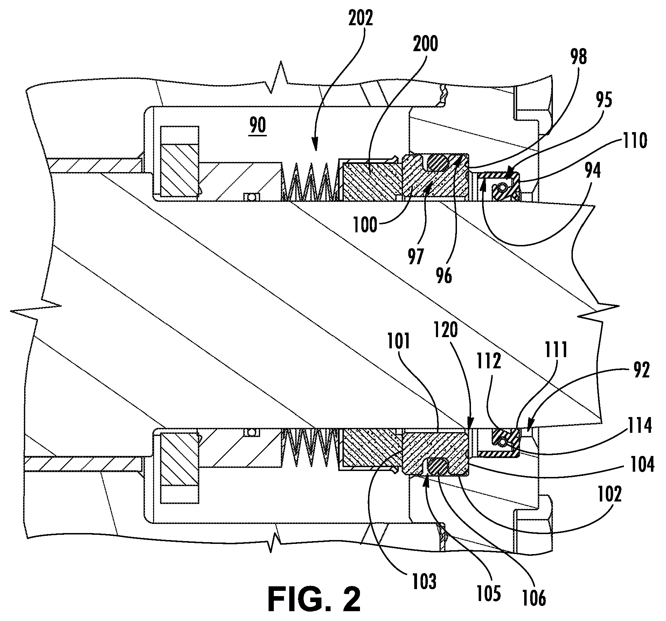

FIGS. 1 and 2 show an exemplary compressor 20. The compressor 20 has a housing (case) assembly 22. The exemplary compressor is driven by an engine 24 (schematically shown). The exemplary case 22 has a suction port (inlet) 26 and a discharge port (outlet) 28. The housing defines a plurality of cylinders 30 and 32. Each cylinder accommodates an associated piston 34 mounted for reciprocal movement at least partially within the cylinder. Exemplary multi-cylinder configurations include: in-line; V (vee); and horizontally opposed. The exemplary compressor is based upon the well known Model 05G compressor manufactured by Carrier Corporation, Syracuse, New York.

Each of the cylinders includes a suction location and a discharge location. For example, the cylinders may be coupled in parallel so that the suction location is shared/common suction plenum fed by the suction port 26 and the discharge location is a shared/common discharge plenum feeding the discharge port 28. In other configurations, the cylinders may share suction locations/conditions but have different discharge locations/conditions. In other configurations, the cylinders may be in series. Exemplary refrigerant is R-404A.

Each of the pistons 34 is coupled via an associated connecting rod 36 to a crankshaft 38. The exemplary crankshaft 38 is held within the case by bearings for rotation about an axis 500. Each piston 30, 32 is coupled to its associated connecting rod 36 via an associated wrist pin 44. The exemplary case includes a main member 50 (e.g., casting of a housing) which forms a cylinder block. A lower end of the main member is closed by a sump plate/cover 52. One or more heads 54 may cover the cylinders. At a front end (e.g., a "distal" end meaning away from the engine), a bearing body 56 (optimally integrated with an oil pump or other system) closes the case and bears a bearing 58 which engages a forward end portion 60 (schematically shown) of the crankshaft near a forward end 61 of the crankshaft. A rear end of the case is closed by a flange 62 and gland plate 64 mounted to the main member 50. The flange 62 and gland plate 64 are mounted along a rear wall 66 of the main member which bears/carries a bearing 68 in a bore/compartment 70. The bearing 68 engages a first intermediate portion 72 of the crankshaft. A rear/second end portion 80 of the crankshaft (near the second end 81 of the crankshaft) is external to the case. The second end portion 80 may bear features (e.g., splines or a keyway 82) for coupling to the engine (including any intervening structure). FIG. 2 shows a second intermediate portion 86 of the crankshaft between the end portion 80 and the first intermediate portion 72.

Where the crankshaft penetrates the case, the crankshaft must be sealed relative to the case. An exemplary sealing system is shown as a modification of the compressor of US2004/0113369 of Wright et al. The Wright et al. primary seal (primary seal system) involves a first ring (seal rotor) which rotates with the shaft and a mating ring (seal stator) which is fixed to the housing (i.e., mounted in the gland plate 64). In Wright et al., the rear/proximal end wall of the case is formed by the rear wall 66 of the main member, and the flange/gland plate combination. An inboard portion 88 of the rear wall 66 defines the bearing compartment 70. Extending outboard (axially) of the bearing compartment 70, the rear wall 66 surrounds most of a seal compartment or "stuffing box" 90 in which the primary seal rotor 200 (FIG. 2) and support 202 are mounted. The gland plate 64 (or stuffing box cover) covers the end of the seal compartment 90 and has an aperture 92 through which the crankshaft extends. Inboard (axially) of the aperture 92, the gland plate has an annular compartment 94 into which a secondary seal 95 is mounted. The exemplary secondary seal 95 may be a lip seal as in Wright et al. The exemplary gland plate has a mating ring (seal stator) compartment 96 inboard of the secondary seal compartment 94 and containing a mating ring (seal stator) 97 which engages the seal rotor 200. The primary seal is "primary" in that it is exposed to the internal compressor pressure at the outboard end of the bearing. The pressure difference (delta P) across the primary seal would be a majority of the pressure difference between sump and atmosphere (e.g., 50-100% of such difference or, more narrowly, 90-100%). If the secondary seal compartment is exposed to the ambient environment-as for example if the leaked oil is allowed to be collected into oil retention container, then the pressure in the secondary seal compartment would essentially be equal to the atmospheric pressure and the primary seal would see essentially 100% of the difference in pressure. The secondary seal is "secondary" in that it intervenes between the primary seal and the external environment. The designation of a seal as "primary" does not require that there be a secondary seal. The exemplary mating ring (seal stator) compartment 96 and secondary seal compartment 94 form a larger stepped compartment with a step or shoulder 98 separating the two. The mating ring (seal stator) 97 may be press fit its compartment 96.

The exemplary mating ring 97 comprises a generally annular rectangular-sectioned member 100 having an inner diameter (ID) surface 101, an outer diameter (OD) surface 102, an (axially) inboard face 103, and an (axially) outboard face 104. A channel 105 in the OD surface carries a resilient seal 106 (e.g., an O-ring) for sealing the mating ring 97 to the gland plate.

The exemplary secondary seal may have a resilient (e.g., elastomeric or PTFE) member 110 (e.g., having a pair of lips 111, 112) and a radial spring 114. The exemplary secondary seal will not be expected to experience the pressure differences of the primary seal. The main purpose of the secondary seal is to prevent the contamination of the primary seal by foreign objects from the outside environment (e.g., dust particles). A space 120 between the primary and secondary seals can trap small amounts of oil that leak through the primary seal. An optional collection passageway 122 (schematically shown in FIG. 1) may communicate with the space 120 to pass such oil to an optional oil collection bottle 124. The passageway 122 and collection bottle 124 prevent oil migration over the secondary lip seal to the outside environment.

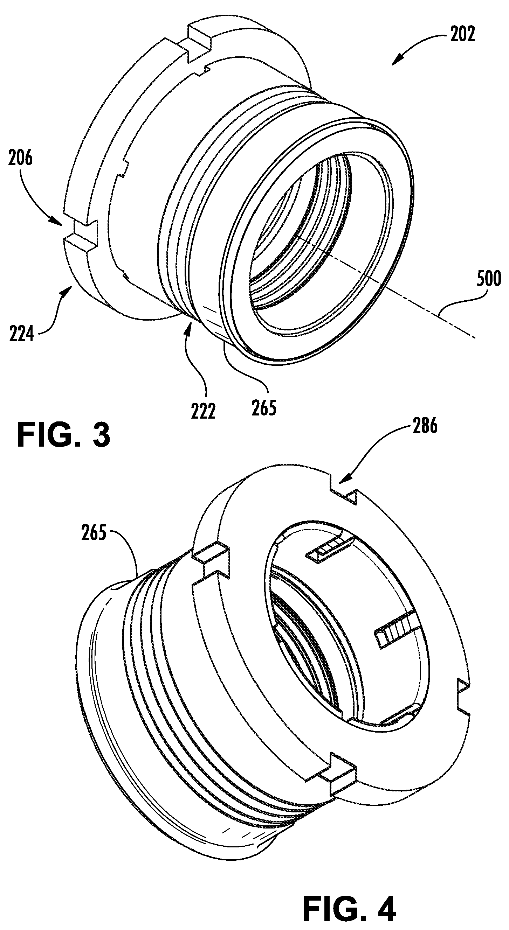

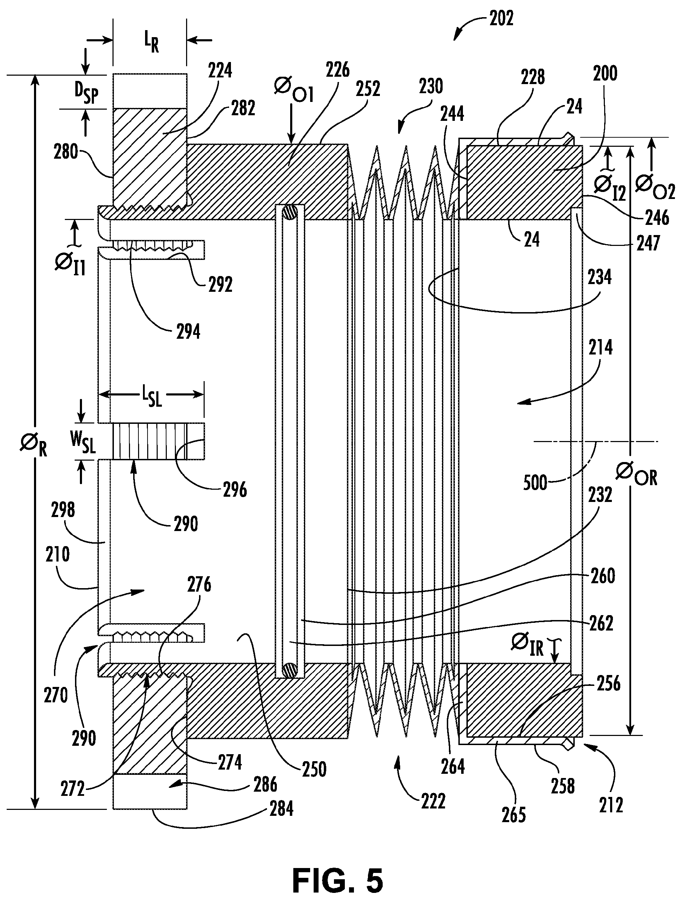

The exemplary seal support 202 (FIG. 3) comprises a body 222 and an internally threaded lock ring 224. The exemplary support body 222 extends from a proximal end 210 (e.g., at a rim (FIG. 5)) to a distal end 212 and defines a central passageway 214 for accommodating the shaft. The exemplary support body 222 comprises an assembly of three principal pieces or members: a proximal member 226 for mounting to the shaft and whose proximal end forms the proximal end 210; a distal member 228 for carrying the seal rotor 200 and whose distal end forms the distal end 212; and a compliant axially intermediate member 230 between a distal end 232 of the member 226 and a proximal end 234 of the member 228. The exemplary members 226 and 228 are metallic machinings (e.g., stainless steel). The exemplary intermediate member 230 comprises a welded metallic bellows (e.g., also stainless steel) assembly. The exemplary bellows is secured to the members 226 and 228 via welding.

The exemplary seal rotor 200 has an inboard (inner diameter or ID) surface 240, and an outboard (outer diameter or OD) surface 242. It has a proximal end face 244 and a distal end face 246. As seen in the exemplary implementation, a slight annular internal rebate/shoulder 247 is formed at a junction between the surfaces 240 and 246. In operation, the surface 246 sealingly, rotationally, and slidingly engages the adjacent surface 103 (FIG. 2) of the seal stator.

The exemplary member 226 has an inboard (inner diameter or ID) surface 250 and an outboard (outer diameter or OD) surface 252. Similarly, the member 228 has an ID surface 256 and an OD surface 258. The exemplary ID surface of the member 226 has an annular channel 260 carrying a seal 262 (e.g., an elastomeric O-ring) for sealing the support to the shaft. The exemplary member 228 comprises a proximal annular flange 264 mounted to the intermediate member 230 and a sleeve 265 extending distally from the flange periphery. The exemplary member 228 is stamped or machined as a single piece of metal (e.g., stainless steel).

Along most of the lengths of the members 226 and 228, the respective OD surfaces 252 and 258 have respective outer diameters shown as Ø_{O1} and Ø_{O2}. Similarly, along most of the respective lengths of the members 226 and 228 the ID faces 250 and 256 have respective inner diameters shown as Ø_{I1} and Ø_{I2}. The seal rotor has, along majorities of its length, respective outer and inner diameters shown as Ø_{OR} and Ø_{IR}. The flange and sleeve respectively define an inboard axial end and an OD periphery of a compartment receiving the seal rotor (e.g., in a press fit). The sleeve has a distal end portion outwardly flared to guide seal rotor insertion, leaving the distal end face 246 of the seal rotor protruding slightly axially therebeyond with the proximal end surface/face 244 bottomed against the distal face of the flange 264. Exemplary Ø_{IR} may be chosen to be equal or slightly larger than the local shaft diameter. By having Ø_{IR} sufficiently greater than the shaft diameter, the seal rotor may go through slight angular excursions relative to the shaft to maintain sealing engagement with the seal stator. Such clearance may be within standard engineering tolerance for seal rotors.

A proximal portion 270 of the proximal member 226 has an outer diameter (OD radial rebate) leaving an externally threaded portion 272 separated from a main portion by a shoulder 274. The externally threaded portion 272 may receive the internal threads 276 of the ring 224. The ring 224 includes a proximal face 280 and a distal face 282. In the installed condition, the distal face 282 abuts the shoulder surface 274. The ring 224 includes an outer diameter (OD) surface 284 bearing a circumferential array of channels 286 which may receive splines of a corresponding spline tool (described further below). The proximal portion 270 has a circumferential array of recesses or slots (through-cut slots from ID to OD) 290 extending inward from the rim 210. Each recess 290 has a first face 292, a second face 294, and a base 296. The portion 270 has a curved ID chamfer 298.

As is discussed further below, the recesses 290 impart additional radial compliance to the portion 270 allowing it to be compressed into clamping engagement with the shaft. The chamfer 298 guides the shaft into the passageway 214 during installation. As is discussed further below, when the ring 224 is tightened on to the member 226 and the surface 282 is bottomed against the shoulder surface 274, further tightening produces a wedging/camming action between the threads of the ring and the threads of the portion 270. This drives the intact segments (petals) of the portion 270 radially inward into compressive frictional engagement with the shaft so as to clamp the member 226 to the shaft. This clamping engagement secures the member 226 both axially and rotationally and allows compression of the intermediate member 230 to bias the member 228 toward the seal stator to maintain rotational sealing engagement between the seal rotor and seal stator.

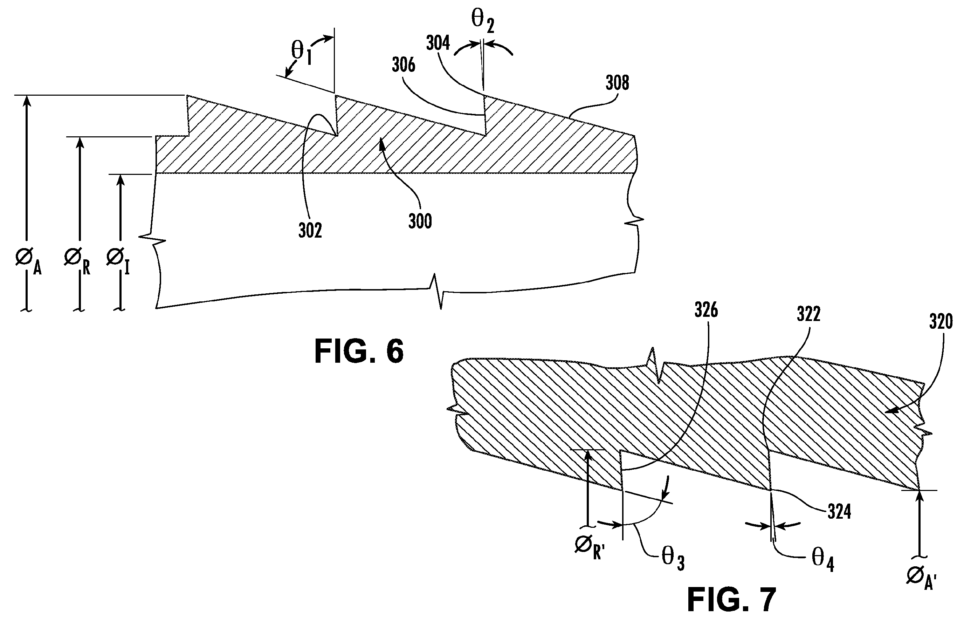

The exemplary external thread 300 (FIG. 6) has a root or base 302 at a diameter Ø_{R} from the centerline and an apex 304 at a diameter Ø_{A}. The thread has a leading face 306 (axially outboard in the illustration) and a trailing face 308 (axially inboard). The leading face 306 is relatively steep/radial (e.g., within 10° of radial, more narrowly, within 5° and, most particularly, at a negative angle θ₂ of -1° to -5° or a nominal 3°). In contrast, the trailing face 308 is relatively shallow (e.g., relatively near axial than radial such as at an angle θ₁ off radial of 60-80°, more narrowly, 70-80° or about 75°). The internal thread 320 similarly has a root 322, an apex 324, a leading face 326, and a trailing face 328. The exemplary threads 300 and 320 are at a pitch of an exemplary eleven turns per inch (tpi), more broadly, 10-12tpi or 8-16tpi (4.3 turns per cm, more broadly, 4-5 or 3-6) for a nominal shift diameter of 1.5 inch (3.81cm).

The exemplary internal thread is sufficiently similar in geometry to the thread 300 so as to mate therewith. In the illustrated example, (FIG. 7) internal thread apex diameter is shown as Ø_{A}', root diameter as Ø_{R}', leading edge negative angle as θ₄, and trailing edge negative angle as θ₃. These dimensions and angles may be chosen so that the two threads properly mate. Exemplary θ₃ may be the same as θ₁ and exemplary θ₄ may be the same as θ₂.

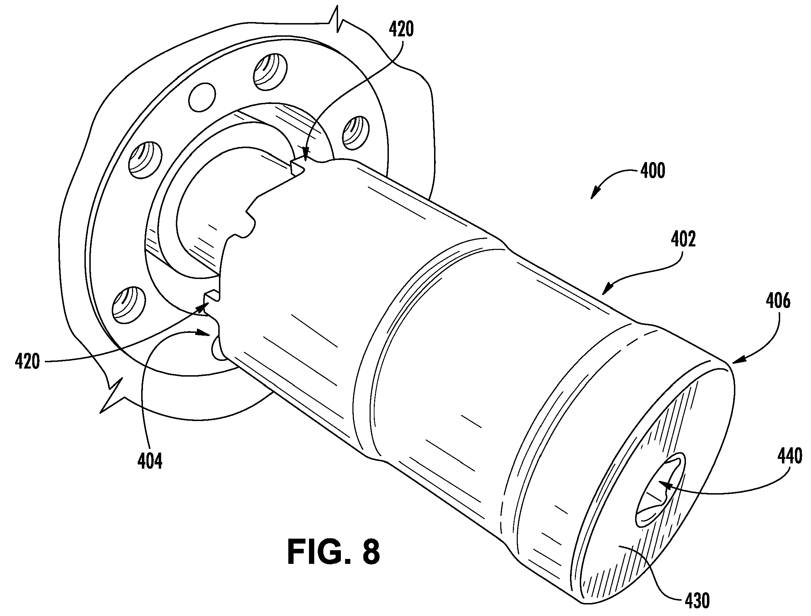

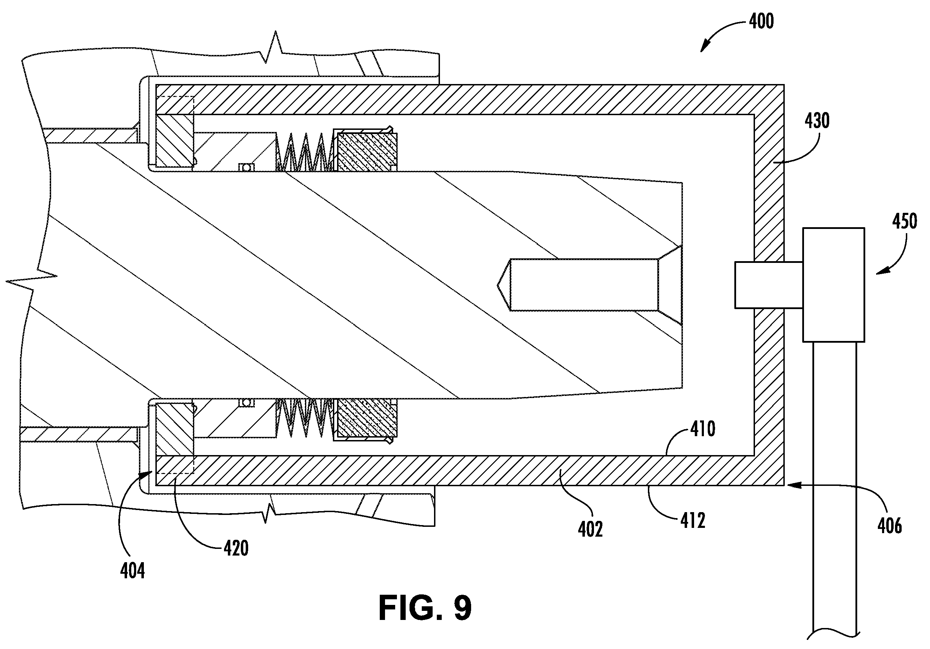

In a service situation (FIGS. 8&9), the gland plate 64 may be removed and one or both of the lip seal 95 and mating ring 97/O-ring 106 extracted and replaced with new ones. To loosen the lock ring 224 (and subsequently re-tighten the lock ring) a tool such as a spline socket (wrench) 400 may be used. The spline socket has an annular sidewall 402 extending from a first end 404 to a second end 406 and having an inner surface 410 and an outer surface 412. The first end bears projections 420 complementary to the recesses 286. The spline socket has a base/web 430 with a socket 440 for receiving a socket driver/handle 450 of appropriate size. The spline socket may be installed over the support/carrier and its projections engaged to the ring recesses 286. Thus, radial clearance may, effectively, be as small as the sidewall thickness of the spline socket. The wrench may then be turned to loosen the ring and release the clamping of the shaft by the portion 270. The wrench may be removed and the support 202 extracted by hand and replaced with a new support 202 (or the seal rotor 200 on the support 202 may be replaced and the support reinstalled). Such replacement may involve tightening the lock ring using the spline tool/wrench. The gland plate may be reinstalled.

An alternative to the O-ring seal 262 involves replacing the bellows 230 with a resilient non-metallic material (e.g., an elastomer) (e.g., with a coil spring or other support) so that linear compression of the bellows causes radial sealing bias between the non-metallic material and shaft. An alternative to the slots 286 is to provide features such as through-holes or blind bores/holes in the face 182 which receive complementary features such as projections (e.g., pins) of the tool.

## Claims

1. A shaft seal assembly comprising:
a support body (222) extending from a first end (210) to a second end (272) and having a central passageway (214) for accommodating the shaft (38) and comprising:
a compliant axially intermediate portion (230);
an axially outboard portion (228) outboard of the compliant intermediate portion;
a seal (200) carried by the axially outboard portion (228); and
an axially inboard portion (226) inboard of the intermediate portion (230) **characterized in that** the axially inboard portion (226) has:
an externally threaded portion (272); and
a plurality of slots (290) through the externally threaded portion (210).

2. The seal assembly of claim 1 further comprising:
an internal channel (260) and an O-ring seal (262) captured within the channel (260).

3. The seal assembly of claim 1 further comprising:
an internally-threaded lock ring (224) engaged to the externally-threaded portion (272).

4. The seal of claim 3 wherein:
the lock ring has external slots (286) for engagement with a spline wrench (400).

5. The seal assembly of claim 1 wherein:
the compliant axially intermediate portion (230) comprises a metallic bellows.

6. The seal assembly of claim 5 wherein:
the inboard portion (226) and the outboard portion (228) are machined stainless steel elements welded to the bellows.

7. The seal assembly of claim 1 wherein the seal (200) comprises graphite.

8. The seal assembly of claim 1 wherein the thread (300) of the externally threaded portion (272) has:
an axial/radial cross-section **characterized by**:
an apex (304);
an outboard face (306) at an angle of -5° to 5°; and
an inboard face (308) at an angle of 60° to 80°.

9. The seal assembly of claim 1 wherein the thread (300) of the externally threaded portion (272) has:
an axial/radial cross-section **characterized by**:
an apex (304);
an outboard face (306) at an angle of -1° to -5°; and
an inboard face (308) at an angle of 70° to 80°.

10. The seal assembly of claim 1 wherein the thread (300) of the externally threaded portion (272) has:
an axial/radial cross-section **characterized by**:
an apex (304);
an outboard face (306) at an angle of -3°; and
an inboard face (308) at an angle of 75°.

11. The seal assembly of claim 1 wherein the thread (300) of the externally threaded portion (272) has:
a pitch of 4 turns per cm to 5 turns per cm.

12. A machine (20) comprising:
a housing (22) having an aperture (92);
a shaft (38) passing through the aperture;
the seal assembly of claim 1 mounted to the shaft within the aperture and further comprising an internally-threaded (320) lock ring (224) engaged to the externally-threaded portion (272).

13. The machine (20) of claim 12 being a compressor wherein:
the seal (200) is within a stuffing box (90) of a first housing member (66);
the aperture (92) is in a stuffing box cover (64); and
the stuffing box cover carries a mating ring (97) engaged to the seal.

14. A method for servicing the machine of claim 12, the method comprising:
inserting the seal assembly over the shaft (38) and into the housing (22);
tightening the lock ring to the seal body using a wrench (400) extending from axially outboard to inboard radially between: the housing; and the axially outboard (228), intermediate (230) and inboard (226) portions; and
installing a cover (64) carrying a mating ring (97) to engage the seal.

15. A compressor (20) comprising
a crankshaft (38);
a case (22) having:
an inlet (26);
at least one cylinder (30-32);
a crankcase compartment (48);
an outlet (28);
a wall (66) through which the crankshaft extends; and
for each of said cylinders:
a piston (34) mounted for reciprocal movement at least partially within the cylinder;
a connecting rod (36) coupling the piston to the crankshaft; and
a wrist pin (44) coupling the connecting rod to the piston;
wherein:
the seal assembly of claim 1 is mounted to the crankshaft.

## Patentansprüche

1. Wellendichtungsanordnung, umfassend:
einen Trägerkörper (222), der sich von einem ersten Ende (210) zu einem zweiten Ende (272) erstreckt und einen zentralen Durchlass (214) zum Aufnehmen der Welle (38) aufweist und Folgendes umfasst:
einen nachgiebigen axial mittleren Abschnitt (230);
einen axial äußeren Abschnitt (228) außerhalb des nachgiebigen mittleren Abschnitts;
eine Dichtung (200), die von dem axial äußeren Abschnitt (228) getragen wird, und
einen axial inneren Abschnitt (226) innerhalb des mittleren Abschnitts (230), **dadurch gekennzeichnet, dass** der axial innere Abschnitt (226) Folgendes aufweist
einen Außengewindeabschnitt (272); und
eine Mehrzahl von Schlitzen (290) durch den Außengewindeabschnitt (210).

2. Dichtungsanordnung nach Anspruch 1, ferner umfassend:
einen Innenkanal (260) und eine O-Ringdichtung (262), die in dem Kanal (260) gehalten wird.

3. Dichtungsanordnung nach Anspruch 1, ferner umfassend:
einen Innengewinde-Verriegelungsring (224), der in Eingriff mit dem Außengewindeabschnitt (272) steht.

4. Dichtung nach Anspruch 3, wobei:
der Verriegelungsring externe Schlitze (286) zum Eingreifen mit einem Profilschlüssel (400) hat.

5. Dichtungsanordnung nach Anspruch 1 wobei:
der nachgiebige axial mittlere Abschnitt (230) einen Metallbalg umfasst.

6. Dichtungsanordnung nach Anspruch 5 wobei:
der innere Abschnitt (226) und der äußere Abschnitt (228) bearbeitete Edelstahlelemente sind, die an den Balg geschweißt sind.

7. Dichtungsanordnung nach Anspruch 1, wobei die Dichtung (200) Graphit umfasst.

8. Dichtungsanordnung nach Anspruch 1, wobei das Gewinde (300) des Außengewindeabschnitts (272) Folgendes aufweist:
einen axialen/radialen Querschnitt, der **gekennzeichnet ist durch**:
einen Scheitel (304);
eine Außenfläche (306) in einem Winkel von -5° bis 5°; und
eine Innenfläche (308) in einem Winkel von 60° bis 80°.

9. Dichtungsanordnung nach Anspruch 1, wobei das Gewinde (300) des Außengewindeabschnitts (272) Folgendes aufweist:
einen axialen/radialen Querschnitt, der **gekennzeichnet ist durch**:
einen Scheitel (304);
eine Außenfläche (306) in einem Winkel von -1° bis -5°; und
eine Innenfläche (308) in einem Winkel von 70° bis 80°.

10. Dichtungsanordnung nach Anspruch 1, wobei das Gewinde (300) des Außengewindeabschnitts (272) Folgendes aufweist:
einen axialen/radialen Querschnitt, der **gekennzeichnet ist durch**:
einen Scheitel (304);
eine Außenfläche (306) in einem Winkel von -3°; und
eine Innenfläche (308) in einem Winkel von 75°.

11. Dichtungsanordnung nach Anspruch 1, wobei das Gewinde (300) des Außengewindeabschnitts (272) Folgendes aufweist:
eine Steigung von 4 Windungen pro cm bis 5 Windungen pro cm.

12. Maschine (20), umfassend:
ein Gehäuse (22) mit einer Öffnung (92);
eine Welle (38), die durch die Öffnung verläuft;
die Dichtungsanordnung nach Anspruch 1, die an der Welle innerhalb der Öffnung angebracht ist und ferner einen Innengewinde-(320) Verriegelungsring (224) umfasst, der in Eingriff mit dem Außengewindeabschnitt (272) steht.

13. Maschine (20) nach Anspruch 12, die ein Kompressor ist, wobei:
die Dichtung (200) innerhalb einer Stopfbuchse (90) eines ersten Gehäuseelements (66) ist;
die Öffnung (92) in einer Stopfbuchsenabdeckung (64) ist; und
die Stopfbuchsenabdeckung einen Fügering (97) trägt, der in Eingriff mit der Dichtung steht.

14. Verfahren zum Warten der Maschine nach Anspruch 12, wobei das Verfahren Folgendes umfasst:
Einführen der Dichtungsanordnung über die Welle (38) und in das Gehäuse (22);
Festziehen des Verriegelungsrings am Dichtungskörper mithilfe eines Schlüssels (400), der sich von axial außen nach innen radial zwischen: dem Gehäuse; und dem axial äußeren (228), mittleren (230) und inneren (226) Abschnitt erstreckt; und
Installieren einer Abdeckung (64), die einen Fügering (97) zum Eingreifen mit der Dichtung trägt.

15. Kompressor (20), umfassend
eine Kurbelwelle (38);
ein Gehäues (22), aufweisend:
einen Einlass (26);
wenigstens einen Zylinder (30-32);
einen Kurbelgehäuseraum (48);
einen Auslass (28);
eine Wand (66), durch die sich die Kurbelwelle erstreckt; und
für jeden der Zylinder:
einen Kolben (34), der für eine Hin- und Herbewegung wenigstens teilweise im Zylinder angebracht ist;
eine Pleuelstange (36), die den Kolben an die Kurbelwelle koppelt; und
einen Kolbenbolzen (44), der die Pleuelstange an den Kolben koppelt;
wobei:
die Dichtungsanordnung nach Anspruch 1 an der Kurbelwelle angebracht ist.

## Revendications

1. Ensemble garniture d'étanchéité d'arbre, comprenant :
un corps de support (222) s'étendant d'une première extrémité (210) à une seconde extrémité (272) et présentant un passage central (214) pour accueillir l'arbre (38) et comprenant :
une partie élastique intermédiaire dans un sens axial (230) ;
une partie extérieure dans un sens axial (228) disposée à l'extérieur de la partie élastique intermédiaire ;
un joint (200) supporté par la partie extérieure dans un sens axial (228) ; et
une partie intérieure dans un sens axial (226) disposée à l'intérieur de la partie intermédiaire (230),
**caractérisé en ce que** la partie intérieure dans un sens axial (226) présente :
une partie à filetage externe (272) ; et
une pluralité de fentes (290) à travers la partie à filetage externe (210).

2. Ensemble garniture d'étanchéité selon la revendication 1, comprenant en outre :
un canal interne (260) et un joint torique (262) capturé à l'intérieur du canal (260).

3. Ensemble garniture d'étanchéité selon la revendication 1, comprenant en outre :
une bague de retenue à filetage interne (224) en prise avec la partie à filetage externe (272).

4. Ensemble garniture d'étanchéité selon la revendication 3, dans lequel :
la bague de retenue présente des fentes externes (286) destinées à entrer en prise avec une clé pour empreinte bristol (400).

5. Ensemble garniture d'étanchéité selon la revendication 1, dans lequel :
la partie élastique intermédiaire dans un sens axial (230) comprend un soufflet métallique.

6. Ensemble garniture d'étanchéité selon la revendication 5, dans lequel :
la partie intérieure (226) et la partie extérieure (228) sont des éléments usinés en acier inoxydable soudés au soufflet.

7. Ensemble garniture d'étanchéité selon la revendication 1, dans lequel le joint (200) comprend du graphite.

8. Ensemble garniture d'étanchéité selon la revendication 1, dans lequel le filetage (300) de la partie à filetage externe (272) présente :
une section transversale axiale/radiale, **caractérisée par** :
un sommet (304) ;
une face extérieure (306) à un angle allant de -5° à 5° ; et
une face intérieure (308) à un angle allant de 60° à 80°.

9. Ensemble garniture d'étanchéité selon la revendication 1, dans lequel le filetage (300) de la partie à filetage externe (272) présente :
une section transversale axiale/radiale, **caractérisée par** :
un sommet (304) ;
une face extérieure (306) à un angle allant de -1° à -5° ; et
une face intérieure (308) à un angle allant de 70° à 80°.

10. Ensemble garniture d'étanchéité selon la revendication 1, dans lequel le filetage (300) de la partie à filetage externe (272) présente :
une section transversale axiale/radiale, **caractérisée par** :
un sommet (304) ;
une face extérieure (306) à un angle de -3° ; et
une face intérieure (308) à un angle de 75°.

11. Ensemble garniture d'étanchéité selon la revendication 1, dans lequel le filetage (300) de la partie à filetage externe (272) présente:
un pas allant de 4 à 5 tours par centimètre.

12. Machine (20), comprenant :
un carter (22) présentant une ouverture (92) ;
un arbre (38) traversant l'ouverture ;
l'ensemble garniture d'étanchéité selon la revendication 1 monté sur l'arbre à l'intérieur de l'ouverture et comprenant en outre une bague de retenue (224) à filetage interne (320) en prise avec la partie à filetage externe (272).

13. Machine (20) selon la revendication 12, ladite machine étant un compresseur, dans laquelle :
le joint (200) est disposé à l'intérieur d'une boîte à garniture (90) d'un premier élément de boîtier (66) ;
l'ouverture (92) est ménagée dans un couvercle de boîte à garniture (64) ; et
le couvercle de boîte à garniture supporte un anneau d'accouplement (97) en prise avec le joint.

14. Procédé d'entretien de la machine selon la revendication 12, le procédé comprenant les étapes consistant à :
introduire l'ensemble garniture d'étanchéité au-dessus de l'arbre (38) et dans le carter (22) ;
serrer l'anneau de retenue contre le corps de joint au moyen d'une clé (400) s'étendant de l'éxtérieur dans un sens axial à l'intérieur dans un sens radial entre :
le boîtier ; et les parties extérieure dans un sens axial (228), intermédiaire (230) et intérieure (226) ; et
installer un couvercle (64) supportant un anneau d'accouplement (97) destiné à entrer en prise avec le joint.

15. Compresseur (20), comprenant :
un vilebrequin (38) ;
un carter (22) comprenant :
un orifice d'admission (26) ;
au moins un cylindre (30 à 32) ;
un compartiment formant carter de vilebrequin (48) ;
un orifice de sortie (28) ;
une paroi (66) à travers laquelle s'étend le vilebrequin ; et, pour chacun desdits cylindres ;
un piston (34) monté de manière à pouvoir effectuer un mouvement alternatif au moins partiellement à l'intérieur du cylindre ;
une tige de connexion (36) accouplant le piston au vilebrequin ; et
un axe de bielle (44) accouplant la tige de connexion au piston ;
dans lequel :
l'ensemble garniture d'étanchéité selon la revendication 1 est monté sur le vilebrequin.
